# EUROPEAN PATENT APPLICATION

(11) **EP 4 641 679 A1**
(43) Date of publication of application: **29.10.2025**
(21) Application number: 25170608.1
(22) Date of filing: 15.04.2025
(51) Int. Cl.: H01M 4/36, H01M 4/525, H01M 10/05, H01M 4/02

(54) **POSITIVE ELECTRODE ACTIVE MATERIALS FOR RECHARGEABLE LITHIUM BATTERIES AND RECHARGEABLE LITHIUM BATTERIES INCLUDING THE POSITIVE ELECTRODE ACTIVE MATERIALS**

(30) Priority: 22.04.2024 KR 20240053475
(71) Applicant: SAMSUNG SDI CO., LTD., Yongin-si, Gyeonggi-do 17084 (KR)
(72) Inventor: CHOI, Minjae, Yongin-si, Gyeonggi-do 17084 (KR); KIM, Young-Ki, Yongin-si, Gyeonggi-do 17084 (KR); CHUNG, Hyunjei, Yongin-si, Gyeonggi-do 17084 (KR); CHO, Yongmok, Yongin-si, Gyeonggi-do 17084 (KR)
(74) Representative: Marks & Clerk LLP

(57) **Abstract**

Disclosed are a positive electrode active material for a rechargeable lithium battery, and a positive electrode including the positive electrode active material, a method of manufacturing positive electrode, and a rechargeable lithium battery. The first positive electrode active material includes a first lithium cobalt-based oxide doped with aluminium and a second positive electrode active material including a second lithium cobalt-based oxide doped with aluminium. An average particle diameter (D₅₀) of the first positive electrode active material is greater than an average particle diameter (D₅₀) of the second positive electrode active material. An amount of aluminium based on 100 wt% of a total metal amount in the second positive electrode active material excluding lithium is greater than an amount of aluminium based on 100 wt% of a total metal amount in the first positive electrode active material excluding lithium.

## Description

### BACKGROUND

### 1. Field

Positive electrode active materials for rechargeable lithium batteries and rechargeable lithium batteries including the positive electrode active materials are disclosed.

### 2. Description of the Related Art

In modern society, the convenience of portable electronic devices is changing our way of life. As portable electronic devices begin to replace more and more things, higher specifications are being demanded for rechargeable lithium batteries used as power sources.

The positive electrode active material used in rechargeable lithium batteries for portable electronic devices is mainly lithium cobalt oxide, and research is currently being conducted to achieve high capacity. The lithium cobalt oxide has a high theoretical capacity of 274 mAh/g. But in reality, only half of the capacity can be used due to the problem of capacity reduction caused by phase transition. In particular, charging and discharging at high voltages are required to achieve high energy density, but research is needed to increase structural stability due to the irreversible phase transition of lithium cobalt oxide and side reactions with the electrolyte that occur at high voltages.

### SUMMARY

Provided are a positive electrode active material for a rechargeable lithium battery that has high stability at high voltage and a rechargeable lithium battery having a high capacity while having low resistance and improved cycle-life characteristics at high voltage and high temperature.

In example embodiments, a positive electrode active material for a rechargeable lithium battery includes a first positive electrode active material including a first lithium cobalt-based oxide doped with aluminium; and a second positive electrode active material including a second lithium cobalt-based oxide doped with aluminium; wherein an average particle diameter (D₅₀) of the first positive electrode active material is greater than an average particle diameter (D₅₀) of the second positive electrode active material, an amount of aluminium based on 100 wt% of a total metal amount in the second positive electrode active material excluding lithium is greater than an amount of aluminium based on 100 wt% of a total metal amount in the first positive electrode active material excluding lithium.

In example embodiments, a positive electrode for a rechargeable lithium battery includes a positive electrode current collector, and a positive electrode active material layer on the positive electrode current collector, wherein the positive electrode active material layer includes the positive electrode active material for the rechargeable lithium battery.

In example embodiments, a method of manufacturing a positive electrode for a rechargeable lithium battery includes preparing a composition including a first positive electrode active material including a first lithium cobalt-based oxide doped with aluminium and a second positive electrode active material including a second lithium cobalt-based oxide doped with aluminium; coating the composition on the current collector; and drying and then compressing the composition on the current collector; wherein an average particle diameter (D₅₀) of the first positive electrode active material is greater than an average particle diameter (D₅₀) of the second positive electrode active material, and an amount of aluminium based on 100 wt% of a total metal amount in the second positive electrode active material excluding lithium is greater than an amount of aluminium based on 100 wt% of a total metal amount in the first positive electrode active material excluding lithium.

In example embodiments, a rechargeable lithium battery includes the positive electrode for the rechargeable lithium battery; a negative electrode; and an electrolyte.

At least some of the above and other features of the invention are set out in the claims.

A positive electrode active material for a rechargeable lithium battery prepared according to example embodiments has high stability at high voltage, and a rechargeable lithium battery including the positive electrode active material can exhibit low resistance and excellent high-temperature cycle-life characteristics while having high capacity and high energy density.

### BRIEF DESCRIPTION OF THE DRAWINGS

FIGS. 1 to 4 are schematic views showing lithium rechargeable batteries according to example embodiments.
FIG. 5 shows transmission electron microscopy (TEM) and Raman images of a cross-section of the positive electrode of Example 1.
FIG. 6 shows TEM and Raman images of a cross-section of the positive electrode of Example 2.
FIG. 7 shows TEM and Raman images of a cross-section of the positive electrode of Comparative Example 1.

### DETAILED DESCRIPTION

Hereinafter, specific embodiments will be described in detail so that those of ordinary skill in the art can easily implement them. However, this disclosure may be embodied in many different forms and is not limited to the example embodiments set forth herein.

The terminology used herein is used to describe embodiments only and is not intended to limit the present disclosure. The singular expression includes the plural expression unless the context clearly dictates otherwise.

"Combination thereof" means a mixture, a laminate, a composite, a copolymer, an alloy, a blend, a reaction product, and the like of the constituents.

It should be understood that terms such as "comprises," "includes," or "have" are intended to designate the presence of an embodied feature, number, step, element, or a combination thereof, but do not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Layer" herein includes not only a shape formed on the whole surface when viewed from a plan view, but also a shape formed on a partial surface.

The average particle diameter may be measured by a method well known to those skilled in the art, for example, by a particle size analyzer, by a transmission electron microscope image, or by a scanning electron microscope image. Alternatively, it is possible to obtain an average particle diameter value by measuring using a dynamic light scattering method, performing data analysis, counting the number of particles for each particle size range, and calculating from the average particle diameter. Unless otherwise defined, the average particle diameter (D₅₀) may mean the diameter of particles having a cumulative volume of 50 volume% in the particle size distribution. In particular, as used herein, when a definition is not otherwise provided, the average particle diameter (D₅₀) means a diameter of particles having a cumulative volume of 50 volume% in the particle size distribution that is obtained by measuring the size (diameter or major axis length) of about 20 particles at random in a scanning electron microscope image.

"Or" is not to be construed as an exclusive meaning, for example, "A or B" is construed to include A, B, A+B, and the like.

"Metal" is interpreted as a concept including ordinary metals, transition metals and metalloids (semi-metals).

### Positive Electrode

A positive electrode for a rechargeable lithium battery includes a positive electrode current collector and a positive electrode active material layer on the positive electrode current collector. The positive electrode active material layer includes a positive electrode active material and may further include a binder and/or a conductive material.

### Positive Electrode Active Material

In order to prevent shrinkage and expansion due to charge and discharge within the positive electrode active material and to stabilize the structure that may collapse due to rearrangement of the layered structure, a positive electrode active material with excellent stability at high voltage is prepared by doping with a different element. In particular, in order to enhance structure stability of the lithium cobalt-based oxides used as the positive electrode active materials, Al³⁺ may be doped. Al³⁺ has a similar ion size to Co³⁺ (Al³⁺: 0.535 Å, Co³⁺: 0.545 Å) and the same oxidation number as the Co³⁺ and, thus, may be easy to use as a doping material. In addition, because Al-O bond energy (511±3 kJ/mol) is stronger than Co-O bond energy (384.5±13.4 kJ/mol), aluminium can play a role in maintaining the structure of the active material during shrinkage and expansion of the active material due to charge and discharge without participating in the electrochemical reaction. Aluminium is therefore advantageous as a doping material.

High-capacity rechargeable lithium batteries must use more capacity at high voltage, and ultimately, aluminium doping is essential to increase structural stability at high voltage. However, while increasing the structural stability, the specific capacity of the positive electrode active material should be secured at a certain level, and an appropriate amount of doping is required at a level such that other characteristics such as resistance are not made worse.

In some example embodiments, by mixing two types of lithium cobalt-based positive electrode active materials having different particle sizes, and by finely controlling the content and content ratio of aluminium doped in each of large and small particles, particularly by increasing the aluminium doping amount in small particles that are relatively more severely deteriorated, a positive electrode active material for a rechargeable lithium battery is provided, which successfully secures structural stability at high voltage and simultaneously improves capacity, resistance, and cycle-life characteristics at high voltage.

In some example embodiments, a positive electrode active material for a rechargeable lithium battery includes a first positive electrode active material including a first lithium cobalt-based oxide doped with aluminium; and a second positive electrode active material including a second lithium cobalt-based oxide doped with aluminium; wherein an average particle diameter (D₅₀) of the first positive electrode active material is larger than an average particle diameter (D₅₀) of the second positive electrode active material, and an aluminium amount based on 100 wt% of a total metal amount in the second positive electrode active material excluding lithium is higher than an aluminium amount based on 100 wt% of a total metal amount in the first positive electrode active material excluding lithium.

### First Positive Electrode Active Material

The first positive electrode active material includes a first lithium cobalt-based oxide doped with aluminium, and the first lithium cobalt-based oxide doped with aluminium may be represented by Chemical Formula 1.

Chemical Formula 1: Liₐ₁Coₓ₁Al_{y1}M¹_{z1}O_{2-b1}X_{b1}

In Chemical Formula 1, 0.9≤a1≤1.8, 0.881≤x1≤0.987, 0.013≤y1≤0.019, 0≤z1≤0.1, 0.9≤x1+y1+z1≤1.1, and 0≤b1≤0.1, M¹ is at least one element selected from B, Ba, Ca, Ce, Cr, Cu, Fe, Mg, Mn, Mo, Nb, Si, Sn, Sr, Ti, V, W, Zn, Y and Zr, and X is one or more elements selected from F, P, and S. For example, 0.883≤x1≤0.987, 0.013≤y1≤0.017, 0≤z1≤0.1, 0.883≤x1≤0.985, 0.015≤y1≤0.017, 0≤z1≤0.1. In some embodiments, z1 is 0. In some embodiments, b1 is 0. In some embodiments, z1 is 0 and b1 is 0; for example, 0.9≤a1≤1.8, 0.881≤x1≤0.987, 0.013≤y1≤0.019, z1=0, 0.9≤x1+y1≤1.1, b1=0; 0.9≤a1≤1.8, 0.883≤x1≤0.987, 0.013≤y1≤0.017, z1=0, 0.9≤x1+y1≤1.1, b1=0; or 0.9≤a1≤1.8, 0.883≤x1≤0.985, 0.015≤y1≤0.017, z1=0, 0.9≤x1+y1≤1.1, b1=0. In addition, 0.9≤a1≤1.5, 0.9≤a1≤1.2, or 0.98≤a1≤1.0.

In the first lithium cobalt-based oxide doped with aluminium, the amount of aluminium based on 100 wt% of a total metal amount excluding lithium may be less than or equal to about 0.9 wt% (less than or equal to about 9000 ppm), for example, less than or equal to about 0.88 wt%, less than or equal to about 0.86 wt%, less than or equal to about 0.84 wt%, less than or equal to about 0.82 wt%, or less than or equal to about 0.8 wt%; and greater than or equal to about 0.6 wt%, greater than or equal to about 0.62 wt%, greater than or equal to about 0.64 wt%, greater than or equal to about 0.66 wt%, greater than or equal to about 0.68 wt%, or greater than or equal to about 0.7 wt% (e.g., about 0.6 wt% to about 0.9 wt%, about 0.62 wt% to about 0.88 wt%, about 0.64 wt% to about 0.86 wt%, about 0.66 wt% to about 0.84 wt%, about 0.68 wt% to about 0.82 wt%, or about 0.7 wt% to about 0.8 wt%). When the amount of aluminium in the first lithium cobalt-based oxide doped with aluminium included in the first positive electrode active material satisfies these ranges, the positive electrode active material including the aluminium may be structurally stable at high voltage and have improved capacity, resistance, and cycle-life characteristics.

The first positive electrode active material including the first lithium cobalt-based oxide doped with aluminium may be in the form of large particles. The average particle diameter (D₅₀) of the first positive electrode active material may be about 7 µm to about 30 µm, for example, about 9 µm to about 25 µm, about 10 µm to about 25 µm, or about 12 µm to about 20 µm. Here, the average particle diameter of the first positive electrode active material is larger than the average particle diameter of the second positive electrode active material, which will be described below. The positive electrode active material according to some example embodiments is a mixture of a first positive electrode active material as large particles and a second positive electrode active material as small particles, thereby improving the mixture density and providing for high capacity and high energy density.

In some example embodiments, based on a total amount of the first positive electrode active material and the second positive electrode active material, the first positive electrode active material may be included in an amount of about 50 wt% to about 90 wt%, for example, about 60 wt% to about 90 wt%, or about 70 wt% to about 90 wt%. In this case, a positive electrode active material including the first positive electrode active material can have high capacity, improve mixture density, and exhibit high energy density.

### Second Positive Electrode Active Material

The second positive electrode active material includes a second lithium cobalt-based oxide doped with aluminium, and the second lithium cobalt-based oxide doped with aluminium may be represented by Chemical Formula 2.

Chemical Formula 2: Liₐ₂Coₓ₂Al_{y2}M²_{z2}O_{2-b2}

In Chemical Formula 2, 0.9≤a2≤1.8, 0.878≤x2≤0.985, 0.015≤y2≤0.022, 0≤z2≤0.1, 0.9≤x2+y2+z2≤1.1, and 0≤b2≤0.1, and M² is at least one of B, Ba, Ca, Ce, Cr, Cu, Fe, Mg, Mn, Mo, Nb, Si, Sn, Sr, Ti, V, W, Zn, Y and Zr. In Chemical Formula 2, for example, 0.881≤x2≤0.984, 0.016≤y2≤0.019, 0≤z2≤0.1, and 0.9≤a2≤1.5, 0.9≤a2≤1.2, or 0.98≤a2≤1.0. In some embodiments, z2 is 0. In some embodiments, b2 is 0. In some embodiments, z2 is 0 and b2 is 0; for example, 0.9≤a2≤1.8, 0.878≤x2≤0.985, 0.015≤y2≤0.022, z2=0, 0.9≤x2+y2≤1.1, b2=0; or 0.9≤a2≤1.8, 0.881≤x2≤0.984, 0.016≤y2≤0.019, z2=0, 0.9≤x2+y2≤1.1, b2=0.

The amount of aluminium in the second lithium cobalt-based oxide doped with aluminium included in the second positive electrode active material may be less than or equal to about 1.0 wt%, for example 0.98 wt%, less than or equal to about 0.96 wt%, less than or equal to about 0.94 wt%, less than or equal to about 0.92 wt%, or less than or equal to about 0.90 wt%; and may be greater than or equal to about 0.70 wt%, greater than or equal to about 0.71 wt%, greater than or equal to about 0.72 wt%, greater than or equal to about 0.73 wt%, greater than or equal to about 0.74 wt%, or greater than or equal to about 0.75 wt% (e.g., about 0.70 wt% to about 1.0 wt%, about 0.71 wt% to about 0.98 wt%, about 0.72 wt% to about 0.96 wt%, about 0.73 wt% to about 0.94 wt%, about 0.74 wt% to about 0.92 wt%, or about 0.75 wt% to about 0.90 wt%). When the amount of aluminium in the second lithium cobalt-based oxide doped with aluminium included in the second positive electrode active material satisfies these ranges, the positive electrode active material including the second lithium cobalt-based oxide can have structural stability at high voltage and at the same time exhibit excellent capacity, resistance, and cycle-life characteristics.

The second positive electrode active material including the second lithium cobalt-based oxide doped with aluminium may be in the form of small particles. The average particle diameter (D₅₀) of the second positive electrode active material may be about 1 µm to about 9 µm, for example about 1 µm to about 8 µm, or about 2 µm to about 6 µm. Here, the average particle diameter of the second positive electrode active material is less than the average particle diameter of the first positive electrode active material described above. According to example embodiments, a positive electrode active material is a mixture of a first positive electrode active material as large particles and a second positive electrode active material as small particles, thereby improving the mixture density and providing for high capacity and high energy density.

In some example embodiments, the second positive electrode active material may be included in an amount of about 10 wt% to about 50 wt%, for example, about 10 wt% to about 40 wt%, or about 10 wt% to about 30 wt%, based on a total amount of the first positive electrode active material and the second positive electrode active material. When the content ratio of the first positive electrode active material and the second positive electrode active material is as described above, the positive electrode active material may have high capacity, improve mixture density, and exhibit high energy density.

In example embodiments, the amount of aluminium based on 100 wt% of a total metal amount in the second positive electrode active material excluding lithium may be greater than the amount of aluminium based on 100 wt% of a total metal amount in the first positive electrode active material excluding lithium. The amount of aluminium based on 100 wt% of a total metal amount in the second positive electrode active material excluding lithium may be greater than or equal to about 0.01 wt%, for example about 0.01 wt% to about 0.20 wt%, about 0.01 wt% to about 0.15 wt%, about 0.01 wt% to about 0.10 wt%, about 0.02 wt% to about 0.10 wt%, about 0.03 wt% to about 0.10 wt%, about 0.04 wt% to about 0.10 wt%, or about 0.05 wt% to about 0.10 wt% than the amount of aluminium based on 100 wt% of a total metal amount in the first positive electrode active material excluding lithium. In some embodiments, a ratio of the aluminium weight of the second positive electrode active material to that of the first positive electrode active material may be about 1.01 to about 1.3, about 1.02 to about 1.25, about 1.03 to about 1.22, about 1.04 to about 1.2, or about 1.05 to about 1.15. The positive electrode active material including these relative amounts of aluminium in the first and second positive electrode active materials can maintain a very stable structure even when repeatedly charging and discharging at high voltage, and the capacity, resistance, and room-temperature/high-temperature cycle-life characteristics can all be improved.

In example embodiments, an amount of aluminium based on 100 wt% of a total metal amount in the first positive electrode active material excluding lithium and the second positive electrode active material excluding lithium may be greater than or equal to about 0.7 wt%, for example about 0.7 wt% to about 1.0 wt%, about 0.65 wt% to about 0.95 wt%, about 0.65 wt% to about 0.9 wt%, about 0.7 wt% to about 0.9 wt%, or about 0.7 wt% to about 0.8 wt%. In such a case, the positive electrode active material can maintain a very stable structure even when repeatedly charging and discharging at high voltage, and the capacity, resistance, and room-temperature/high-temperature cycle-life characteristics can all be improved.

The first positive electrode active material and the second positive electrode active material may include a coating layer on the surface of the materials. The coating layer may include at least one of Al, B, Ce, Cr, F, Mg, Mn, Mo, Nb, P, S, Si, Sr, Ti, V, W, Zr, and a combination thereof, and may include an oxide, a hydroxide, or a combination thereof including such a coating element.

In some example embodiments, a positive electrode for a rechargeable lithium battery includes the aforementioned positive electrode active material. The positive electrode may include a current collector and a positive electrode active material layer on the current collector, wherein the positive electrode active material layer includes the aforementioned positive electrode active material and may optionally further include a binder and/or a conductive material.

A density of the positive electrode active material layer including the first positive electrode active material and the second positive electrode active material may be about 4.0 g/cc to about 4.5 g/cc, for example, about 4.0 g/cc to about 4.4 g/cc, about 4.0 g/cc to about 4.3 g/cc, about 4.1 g/cc to about 4.3 g/cc, or about 4.1 g/cc to about 4.2 g/cc. The density of the positive electrode active material layer means density of the positive electrode active material layer in a compressed state. If the density of the positive electrode active material layer satisfies these ranges, high energy density and high capacity may be realized. However, in a high-density positive electrode like this, the problem of damage to the positive electrode active material may occur due to repeated charging and discharging. But, according to the positive electrode design of some example embodiments, it is possible to effectively suppress damage to the positive electrode active material while implementing a very high density.

A total thickness of the positive electrode active material layer may be about 10 µm to about 200 µm, for example, about 10 µm to about 180 µm, about 10 µm to about 160 µm, about 20 µm to about 160 µm, about 20 µm to about 140 µm, about 20 µm to about 120 µm, about 30 µm to about 120 µm, or about 30 µm to about 100 µm. If the total thickness of the positive electrode active material layer satisfies these ranges, high capacity can be achieved, and the problem of positive electrode active materials deterioration due to repeated charging and discharging can be effectively prevented, thereby improving cycle-life characteristics of the battery.

### Binder

A binder improves binding properties of positive electrode active material particles with one another and with a current collector. Examples of binders include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like. But the present disclosure is not limited to these examples.

An amount of the binder in the positive electrode active material layer may be approximately about 1 wt% to about 5 wt% based on a total weight of the positive electrode active material layer.

### Conductive Material

The conductive material according to example embodiments is included to provide electrode conductivity and any electrically conductive material may be used provided that it does not cause a chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture thereof.

An amount of the positive electrode active material may be about 90 wt% to about 99.8 wt%, or about 95 wt% to about 99 wt%, and an amount of the binder and the conductive material may be about 0.1 wt% to about 5 wt%, or about 0.5 wt% to about 2.5 wt%, respectively, based on 100 wt% of the positive electrode active material layer.

### Current Collector

The positive electrode current collector according to example embodiments is not limited as long as it is conductive without causing chemical changes in the rechargeable lithium battery, but specific examples may include aluminium, stainless steel (SUS), indium, magnesium, titanium, iron, cobalt, nickel, zinc, germanium, lithium, or a combination thereof, and it may include aluminium. The shape of the current collector may be plate-shaped or thin-shaped.

### Method of Manufacturing Positive Electrode

A method of preparing a positive electrode active material according to example embodiments includes preparing a composition including a first positive electrode active material including a first lithium cobalt-based oxide doped with aluminium; preparing a second positive electrode active material including a second lithium cobalt-based oxide doped with aluminium; coating the composition on the current collector; and drying and then compressing the composition on the current collector; wherein an average particle diameter (D₅₀) of the first positive electrode active material is greater than an average particle diameter (D₅₀) of the second positive electrode active material, an aluminium content based on 100 wt% of a total metal amount in the second positive electrode active material excluding lithium is greater than an aluminium content based on 100 wt% of a total metal amount in the first positive electrode active material excluding lithium.

The first positive electrode active material and the second positive electrode active material may each be prepared by a method of mixing a lithium raw material with a precursor, which is cobalt hydroxide, cobalt oxide, cobalt-based metal composite oxide, or a cobalt-based metal composite hydroxide, and then performing a heat treatment on the mixture. The heat treatment may be performed at a temperature of, for example, about 800 °C to about 1100 °C, about 850 °C to about 1050 °C, or about 890 °C to about 1010 °C. The heat treatment may be performed for about 5 hours to about 25 hours, for example, about 8 hours to about 15 hours. The precursor may be prepared by a co-precipitation method, etc.

A method of preparing a positive electrode active material for a rechargeable lithium battery according to example embodiments may include mixing a first cobalt-based metal composite hydroxide and a lithium raw material and performing a heat treatment on the mixture to obtain a first positive electrode active material; mixing a second cobalt-based metal composite hydroxide and a lithium raw material and performing a heat treatment on the mixture to obtain a second positive electrode active material; and mixing the first positive electrode active material and the second positive electrode active material.

The first cobalt-based metal composite hydroxide may be represented by Chemical Formula 11, and the second cobalt-based metal composite hydroxide can be represented by Chemical Formula 12.

Chemical Formula 11: Coₓ₁₁Al_{y11}M¹¹_{z1}(OH)₂

In Chemical Formula 11, 0.881≤x11≤0.987, 0.013≤y11≤0.019, 0≤z11≤0.1, 0.9≤x11+y11+z11≤1.1, and M¹¹ is at least one of B, Ba, Ca, Ce, Cr, Cu, Fe, Mg, Mn, Mo, Nb, Si, Sn, Sr, Ti, V, W, Zn, Y and Zr. For example, 0.883≤x11≤0.987, 0.013≤y11≤0.017, 0≤z11≤0.1, 0.883≤x11≤0.985, 0.015≤y11≤0.017, 0≤z11≤0.1. In some embodiments, z11 is 0; for example, 0.881≤x11≤0.987, 0.013≤y11≤0.019, z11=0, 0.9≤x11+y11≤1.1; 0.883≤x11≤0.987, 0.013≤y11≤0.017, z11=0, 0.9≤x11+y11≤1.1; or 0.883≤x11≤0.985, 0.015≤y11≤0.017, z11=0, 0.9≤x11+y11≤1.1.

Chemical Formula 12: Coₓ₁₂Al_{y12}M¹²_{z12}(OH)₂

In Chemical Formula 12, 0.878≤x12≤0.985, 0.015≤y12≤0.022, 0≤z12≤0.1, 0.9≤x12+y12+z12≤1.1, and M¹² is at least one element selected from B, Ba, Ca, Ce, Cr, Cu, Fe, Mg, Mn, Mo, Nb, Si, Sn, Sr, Ti, V, W, Zn, Y and Zr, and a combination thereof. In Chemical Formula 12, for example, 0.881≤x12≤0.984, 0.016≤y12≤0.019, 0≤z12≤0.1. In some embodiments, z12 is 0; for example, 0.878≤x12≤0.985, 0.015≤y12≤0.022, z12=0, 0.9≤x12+y12≤1.1; or 0.881≤x12≤0.984, 0.016≤y12≤0.019, z12=0, 0.9≤x12+y12≤1.1.

The first cobalt-based metal composite hydroxide is in the form of particles and may have an average particle diameter of about 7 µm to about 30 µm (e.g., about 9 µm to about 25 µm, about 10 µm to about 25 µm, or about 12 µm to about 20 µm). The second cobalt-based metal composite hydroxide is in the form of particles and may have an average particle diameter of about 1 µm to about 9 µm (e.g., about 1 µm to about 8 µm, or about 2 µm to about 6 µm).

In the composition including the first positive electrode active material and the second positive electrode active material, the first positive electrode active material may be included in an amount of about 50 wt% to about 90 wt%, for example, about 60 wt% to about 90 wt%, or about 70 wt% to about 90 wt%, based on a total amount of the first positive electrode active material and the second positive electrode active material. Additionally, the second positive electrode active material may be included in an amount of about 10 wt% to about 50 wt%, for example, about 10 wt% to about 40 wt%, or about 10 wt% to about 30 wt% based on a total amount of the first positive electrode active material and the second positive electrode active material. When the content ratio of the first positive electrode active material and the second positive electrode active material is in these ranges, the positive electrode active material can provide for high capacity, improve mixture density, and exhibit high energy density.

In the above-described process coating the composition on the current collector, a loading level of the composition on the current collector may be about 5 mg/cm² to about 50 mg/cm², for example, about 5 mg/cm² to about 40 mg/cm², about 10 mg/cm² to about 40 mg/cm², or about 10 mg/cm² to about 30 mg/cm², based on the cross-section of the positive electrode active material layer. By loading the positive electrode active material in these ranges, there is an advantage in that an appropriate amount of the positive electrode active material can be uniformly coated on the current collector.

In the above-described compressing process, a density of the compressed final positive electrode active material layer may be about 4.0 g/cc to about 4.5 g/cc, for example, about 4.0 g/cc to about 4.4 g/cc, about 4.0 g/cc to about 4.3 g/cc, about 4.1 g/cc to about 4.3 g/cc, or about 4.1 g/cc to about 4.2 g/cc. When the density of the positive electrode active material layer satisfies these range, high energy density and high capacity can be achieved. In a high-density positive electrode active material layer, there may be problem of damage to the positive electrode active material occurring due to repeated charging and discharging. However, according to the positive electrode design of example embodiments, it is possible to effectively suppress damage to the positive electrode active material while implementing a very high density.

### Rechargeable Lithium Battery

In example embodiments, the rechargeable lithium battery includes the positive electrode; a negative electrode; and an electrolyte. Here, the electrolyte may be a liquid electrolyte or a solid electrolyte.

For example, in some embodiments, a rechargeable lithium battery includes the aforementioned positive electrode, a negative electrode, a separator between the positive electrode and the negative electrode, and an electrolyte. As another example, an all-solid-state rechargeable battery includes the aforementioned positive electrode, a negative electrode, and a solid electrolyte layer between the positive electrode and the negative electrode.

Hereinafter, a rechargeable lithium battery using an electrolyte will be described as an example.

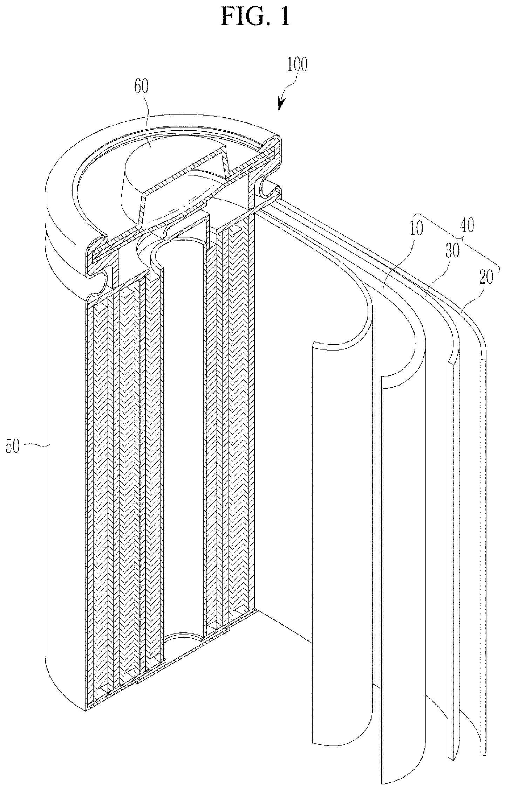

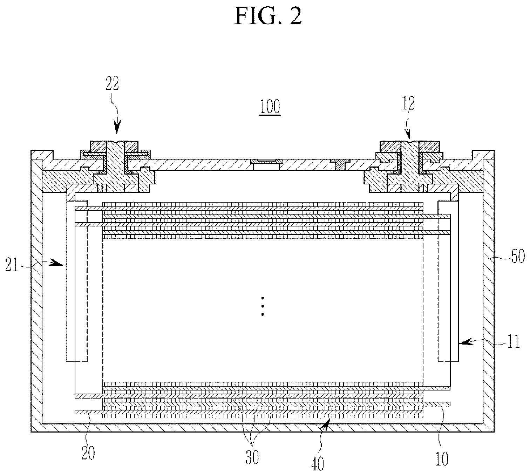

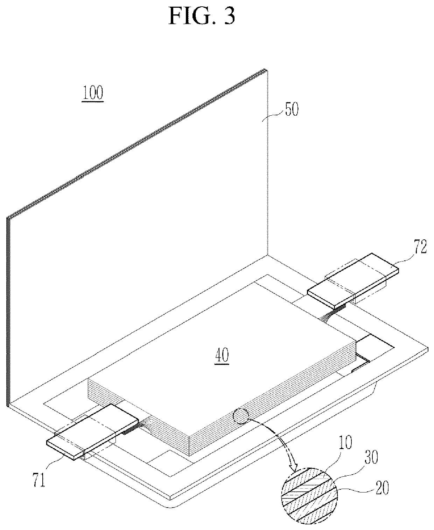

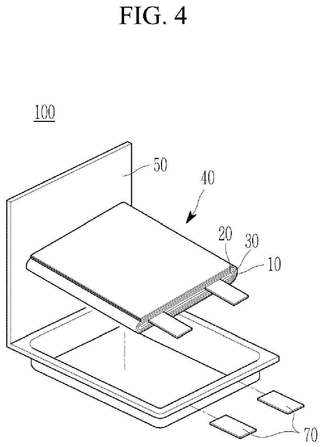

Rechargeable lithium batteries may be classified as cylindrical, prismatic, pouch, coin, etc. depending on their shape. FIGS. 1 to 4 are schematic views showing rechargeable lithium batteries according to example embodiments. FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte (not shown). The rechargeable lithium battery 100 may include a sealing member 60 that seals the case 50 as shown in FIG. 1. Additionally, as shown in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 may include an electrode tab 70, that is, a positive electrode tab 71 and a negative electrode tab 72 serving as an electrical path for inducing the current formed in the electrode assembly 40 to outside of the battery.

### Negative Electrode

The negative electrode for a rechargeable lithium battery includes a negative electrode current collector and a negative electrode active material layer on the negative electrode current collector. The negative electrode active material layer includes a negative electrode active material and may further include a binder and/or a conductive material.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn (e.g., Na, K, Rb, Cs, Be, Mg, Ca, Sr, Si, Sb, Pb, In, Zn, Ba, Ge, Al, and Sn).

The material capable of doping/dedoping lithium may be a Si-based negative electrode active material or a Sn-based negative electrode active material. The Si-based negative electrode active material may include silicon, a silicon-carbon composite, SiOₓ (0<x≤2), a Si-Q alloy, or a combination thereof.

In the Si-Q alloy, Q is an element selected from an alkali metal, an alkaline-earth metal, a Group 13 element, a Group 14 element (excluding Si), a Group 15 element, a Group 16 element, a transition metal, a rare earth element, and a combination thereof. The Sn-based negative electrode active material may be Sn, SnO₂, a Sn-based alloy, or a combination thereof.

The silicon-carbon composite may be a composite of silicon and amorphous carbon. According to example embodiments, the silicon-carbon composite may be in the form of silicon particles and amorphous carbon coated on the surfaces of the silicon particles. For example, the silicon carbon composite may include a secondary particle (core) in which silicon primary particles are assembled and an amorphous carbon coating layer (shell) on the surface of the secondary particle. The amorphous carbon may also be present between the silicon primary particles. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core.

The Si-based negative electrode active material or Sn-based negative electrode active material may be mixed with the carbon-based negative electrode active material. The negative electrode active material layer may include, for example, about 90 wt% to about 99 wt of the negative electrode active material, about 0.5 wt% to about 5 wt% of the binder, and about 0 wt% to about 5 wt% of the conductive material.

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity and any electrically conductive material may be used as a conductive material provided that it does not cause a chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture thereof.

The negative electrode current collector may be selected from copper foil, nickel foil, stainless steel foil, titanium foil, nickel foam, copper foam, a polymer substrate coated with a conductive metal, and a combination thereof.

### Electrolyte

The electrolyte for a rechargeable lithium battery includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether group, and the like; amides such as dimethylformamide; dioxolanes such as 1,3-dioxolane, 1,4-dioxolane, and the like; sulfolanes, and the like.

The non-aqueous organic solvents can be used alone or in a combination of two or more.

When using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

### Separator

Depending on the type of the rechargeable lithium battery, a separator may be provided between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

Examples and comparative examples of the present disclosure are described below. However, the following are only examples of the present disclosure, and the present disclosure is not limited to the following examples.

### Example 1

### Preparation of Positive Electrode Active Material

A first cobalt transition metal composite oxide having the formula Co_{0.985}Al_{0.015}O₂ and having an Al content of 7000 ppm (0.7 wt%) and Li₂CO₃ were mixed so that the total metal of the first cobalt transition metal composite oxide and lithium of Li₂CO₃ have a mole ratio of 1:1.04. The mixture was heat-treated under an air atmosphere at about 1000°C for 10 hours, thereby preparing a first positive electrode active material (Li_{1.04}Co_{0.985}Al_{0.015}O₂) having an average particle diameter (D₅₀) of about 15 µm.

A second cobalt transition metal composite oxide having the formula Co_{0.984}Al_{0.016}O₂ and having an Al content of 7500 ppm (0.75 wt%) and Li₂CO₃ were mixed so that the total metal of the first cobalt transition metal composite oxide and lithium of Li₂CO₃ have a mole ratio of 1:1.02. The mixture was heat-treated under an air atmosphere at about 900°C for 10 hours to prepare a second positive electrode active material (Li_{1.02}Co_{0.985}Al_{0.015}O₂) having an average particle diameter (D₅₀) of about 4 µm.

The prepared first and second positive electrode active materials were mixed in a weight ratio of 8:2 to prepare a positive electrode active material.

### Manufacturing of Positive Electrode

98.5 wt% of the positive electrode active material, 1.0 wt% of a polyvinylidene fluoride binder, and 0.5 wt% of a carbon nanotube conductive material were mixed to prepare positive electrode active material layer slurry. The positive electrode active material layer slurry was coated on an aluminium foil current collector and then drying and then compressing to manufacture a positive electrode. A loading level of the positive electrode active material layer was 20 mg/cm², and a density of the finally compressed positive electrode active material layer was about 4.1 g/cc.

### Manufacturing of Rechargeable Lithium Battery Cell

97.5 wt% of graphite negative electrode active material, 1.5 wt% of carboxymethyl cellulose, and 1 wt% of styrene butadiene rubber were mixed in a water solvent to prepare a negative electrode active material layer slurry. The negative electrode active material layer slurry was coated on a copper foil current collector and then dried and compressed to manufacture a negative electrode.

A polytetrafluoroethylene separator and an electrolyte prepared by dissolving 1 M LiPF₆ in a mixed solvent of ethylene carbonate and dimethyl carbonate in a volume ratio of 3:7 were used in a known method to manufacture a rechargeable lithium battery cell.

### Examples 2 and 3 and Comparative Examples 1 to 8

A positive electrode active material, a positive electrode, and a battery cell were manufactured in the same manner as in Example 1 except that the aluminium content of the first positive electrode active material and the aluminium content of the second positive electrode active material were changed as shown in Table 1. In addition, the ratio of the aluminium content of the second positive electrode active material to that of the first positive electrode active material is shown as "Ratio of 2nd Al to 1st Al" in Table 1.

**Table 1**

| | Aluminum content of first positive electrode active material | | Aluminum content of second positive electrode active material | | Ratio of 2nd Al to 1st Al |
|---|---|---|---|---|---|
| | ppm | wt% | ppm | wt% | |
| Example 1 | 7000 | 0.7 | 7500 | 0.75 | 1.07 |
| Example 2 | 7000 | 0.7 | 8000 | 0.8 | 1.14 |
| Example 3 | 7000 | 0.7 | 9000 | 0.9 | 1.29 |
| Comparative Example 1 | 6000 | 0.6 | 6000 | 0.6 | 1 |
| Comparative Example 2 | 6500 | 0.65 | 6500 | 0.65 | 1 |
| Comparative Example 3 | 7000 | 0.7 | 7000 | 0.7 | 1 |
| Comparative Example 4 | 8500 | 0.85 | 8500 | 0.85 | 1 |
| Comparative Example 5 | 9000 | 0.9 | 9000 | 0.9 | 1 |
| Comparative Example 6 | 7000 | 0.7 | 5000 | 0.5 | 0.71 |
| Comparative Example 7 | 7000 | 0.7 | 6000 | 0.6 | 0.85 |
| Comparative Example 8 | 8000 | 0.8 | 7000 | 0.7 | 0.88 |

Referring to Table 1, it can be seen that Examples 1 to 3 exhibited a ratio of the aluminium content in the second positive electrode active material to that of the first positive electrode active material that was greater than 1, but the ratio for the Comparative Examples 1 to 8 was less than or equal to 1.

### Evaluation Example 1: Initial Capacity Evaluation

The cells of Examples 1 to 3 and Comparative Examples 1 to 8 were charged to an upper limit voltage of 4.56 V at a constant current of 0.2 C and discharged to a cut-off voltage of 3.0 V at 0.2 C at 25°C to measure initial charge capacity and initial discharge capacity. A ratio of initial discharge capacity to initial charge capacity was calculated as initial charging and discharging efficiency, and the results are shown as "Efficiency (%)" in Table 2.

### Evaluation Example 2: Resistance Evaluation

The cells of Examples 1 to 3 and Comparative Examples 1 to 8 in SOC 10 (residual capacity 10%), after the initial charging and discharging in Evaluation Example 1, were measured with respect to resistance. The results are shown in Table 2.

### Evaluation Example 3: Evaluation of High-temperature Cycle-life

The cells, which completed the initial charge and discharge in Evaluation Example 1, were repeatedly charged and discharged 30 times at 0.35 C within a voltage range of 3.0V to 4.56V at 45°C to measure the 30^{th} discharge capacity, and a ratio of the 30^{th} discharge capacity to the initial discharge capacity was calculated as capacity retention, that is, high-temperature cycle-life characteristics. The results are shown as "4.56 V high-temperature cycle-life (%)" in Table 2.

**Table 2**

| | Aluminu m content of the first positive electrod e active material (ppm) | Aluminu m content of the second positive electrod e active material (ppm) | Capacity (mAh/g) | | Efficien cy (%) | Resistance (Ω) @SOC10 | 4.56 V high-temperat ure cycle-life (%) |
|---|---|---|---|---|---|---|---|
| | | | Initial charge capacity | Initial discharge capacity | | | |
| Example 1 | 7000 | 7500 | 209.5 | 194.6 | 92.9 | 13.4 | 92.4 |
| Example 2 | 7000 | 8000 | 209.0 | 193.7 | 92.7 | 13.7 | 93.0 |
| Example 3 | 7000 | 9000 | 207.5 | 191.9 | 92.5 | 14.5 | 93.0 |
| Comparative Example 1 | 6000 | 6000 | 212.8 | 197.9 | 93 | 12.0 | 87.8 |
| Comparative Example 2 | 6500 | 6500 | 211.1 | 196.1 | 92.9 | 12.2 | 88.4 |
| Comparative Example 3 | 7000 | 7000 | 210.1 | 195.3 | 92.9 | 13.0 | 89.8 |
| Comparative Example 4 | 8500 | 8500 | 206.8 | 189.2 | 91.5 | 14.8 | 93.8 |
| Comparative Example 5 | 9000 | 9000 | 206.0 | 188.0 | 91.3 | 15.6 | 94.0 |
| Comparative Example 6 | 7000 | 5000 | 210.5 | 196.0 | 93.1 | 12.8 | 88.2 |
| Comparative Example 7 | 7000 | 6000 | 210.0 | 195.4 | 93.0 | 12.8 | 88.3 |
| Comparative Example 8 | 8000 | 7000 | 208.8 | 191.5 | 91.7 | 14.3 | 91.8 |

As shown in Table 2, Comparative Examples 1 to 3 exhibited significantly low 4.56 V high temperature cycle-life of less than 90%, and Comparative Examples 4 and 5 were analyzed to have initial discharge capacity of less than 190 mAh/g.

On the other hand, Examples 1 to 3 exhibited initial discharge capacity of greater than 190 mAh/g, high initial charging and discharging efficiency of greater than 92%, and 4.56 V high temperature cycle-life of greater than 92%. Thus, Examples 1 to 3 were excellent in all evaluation aspects.

Comparing Example 2 with Comparative Example 3, the first positive electrode active materials had the same Al content of 7000 ppm, but the second positive electrode active materials had a different Al content of 8000 ppm or 7000 ppm, respectively. Accordingly, Example 2 and Comparative Example 3 exhibited a different ratio of the Al content of the second positive electrode active material to that of the first positive electrode active material, specifically, 1.14 and 1, wherein Example 2 had a higher aluminium content of the second positive electrode active material than that of the first positive electrode active material, which was not satisfied by Comparative Example 3. Referring to Table 2, as compared to Example 2, Comparative Example 3 exhibited a deteriorated 4.56 V high temperature cycle-life.

Comparing Comparative Example 3 with Comparative Example 1, Comparative Example 3 had an aluminium content of 7000 ppm in each of the first and second positive electrode active materials, but Comparative Example 1 had an aluminium content of 6000 ppm in each of the first and second positive electrode active materials. Referring to Table 2, as compared to Comparative Example 3, Comparative Example 1 exhibited a deteriorated 4.56 V high temperature cycle-life. In addition, comparing Comparative Example 3 with Comparative Example 5, Comparative Example 3 had an aluminium content of 7000 ppm in each of the first and second positive electrode active materials, and Comparative Example 5 had an aluminium content of 9000 ppm in each of the first and second positive electrode active materials. Referring to Table 2, as compared to Comparative Example 3, Comparative Example 1 exhibited significantly deteriorated initial discharge capacity.

Additionally, Comparative Examples 6 and 7, in which a ratio of aluminium content of the second positive electrode active material to that of the first positive electrode active material was less than 1, exhibited a significantly low high temperature cycle-life of less than 90%, and Comparative Example 8 exhibited low initial charging and discharging efficiency of less than 92%.

### Evaluation Example 4: Degradation Analysis

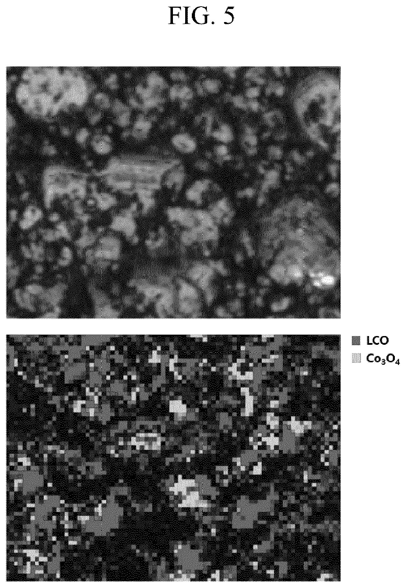

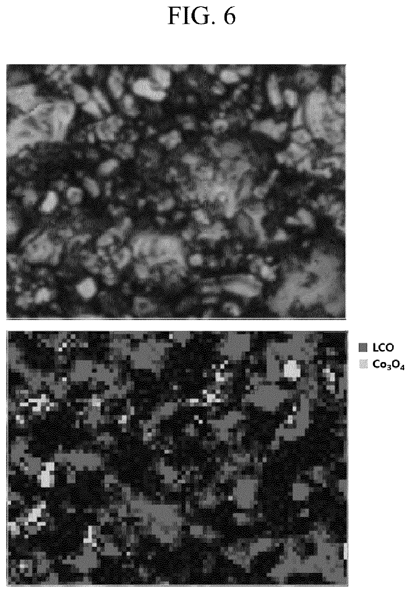

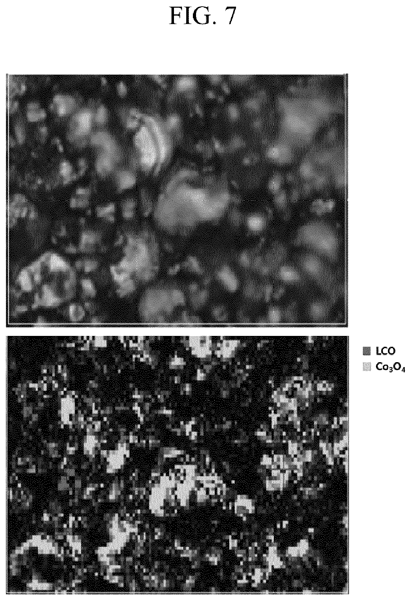

After evaluating the high-temperature cycle-life characteristics of the cells of Examples 1 and 2 and Comparative Example 1, the positive electrodes were separated to take an image of a cross-section of the positive electrodes with TEM and subjected to RAMAN analysis, and the results of regions respectively corresponding to LCO (lithium cobalt oxide) and Co₃O₄ are shown in FIGS. 5 to 7. The results for Comparative Example 1 are shown in FIG. 7. It can be seen that there are more light regions than dark regions in the TEM image and the RAMAN analysis image, which indicates that the positive electrode active materials were severely deteriorated and converted to Co₃O₄. On the other hand, FIG. 5 shows TEM and RAMAN images of Example 1 and FIG. 6 shows TEM and RAMAN images of Example 2. As can be seen in these figures, the darker regions are increased, while the lighter regions are decreased, which confirmed that degradation of the positive electrode active materials was reduced.

While this disclosure has been described in connection with what is presently considered to be practical example embodiments, it is to be understood that the disclosure is not limited to the disclosed embodiments. On the contrary, it is intended to cover various modifications and equivalent arrangements included within the scope of the present disclosure.

### <Description of Symbols>

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material for a rechargeable lithium battery, the positive electrode active material comprising:
a first positive electrode active material including a first lithium cobalt-based oxide doped with aluminium; and
a second positive electrode active material including a second lithium cobalt-based oxide doped with aluminium;
wherein an average particle diameter (D₅₀) of the first positive electrode active material is greater than an average particle diameter (D₅₀) of the second positive electrode active material, and
wherein an amount of aluminium based on 100 wt% of a total metal amount in the second positive electrode active material excluding lithium is greater than an amount of aluminium based on 100 wt% of a total metal amount in the first positive electrode active material excluding lithium.

2. The positive electrode active material as claimed in claim 1, wherein, in the first positive electrode active material, an amount of aluminium based on 100 wt% of a total metal amount excluding lithium is about 0.6 wt% to about 0.9 wt%, and
wherein, in the second positive electrode active material, an amount of aluminium based on 100 wt% of a total metal amount excluding lithium is about 0.7 wt% to about 1.0 wt%.

3. The positive electrode active material as claimed in claim 1 or claim 2, wherein an average particle diameter (D₅₀) of the first positive electrode active material is about 7 µm to about 30 µm.

4. The positive electrode active material as claimed in any one of claims 1 to 3, wherein an average particle diameter (D₅₀) of the second positive electrode active material is about 1 µm to about 9 µm.

5. The positive electrode active material as claimed in any one of claims 1 to 4, wherein the first positive electrode active material is included in an amount of about 50 wt% to about 90 wt% and the second positive electrode active material is included in an amount of about 10 wt% to about 50 wt% based on a total amount of the first positive electrode active material and the second positive electrode active material.

6. The positive electrode active material as claimed in any one of claims 1 to 5, wherein the amount of aluminium in the second positive electrode active material is greater by about 0.01 wt% to about 0.10 wt% than the amount of aluminium in the first positive electrode active material.

7. The positive electrode active material as claimed in any one of claims 1 to 6, wherein an amount of aluminium based on 100 wt% of a total metal amount in the first positive electrode active material excluding lithium and the second positive electrode active material excluding lithium is about 0.65 wt% to about 0.95 wt%.

8. The positive electrode active material as claimed in any one of claims 1 to 7, wherein the first lithium cobalt-based oxide doped with aluminium is represented by:
Liₐ₁Coₓ₁Al_{y1}M¹_{z1}O_{2-b1}X_{b1}
with 0.9≤a1≤1.8, 0.881≤x1≤0.987, 0.013≤y1≤0.019, 0≤z1≤0.1, 0.9≤x1+y1+z1≤1.1, and 0≤b1≤0.1, with M¹ being at least one of B, Ba, Ca, Ce, Cr, Cu, Fe, Mg, Mn, Mo, Nb, Si, Sn, Sr, Ti, V, W, Zn, Y and Zr, and with X being at least one of F, P, and S.

9. The positive electrode active material as claimed in any one of claims 1 to 8, wherein the second lithium cobalt-based oxide doped with aluminium is represented by:
Liₐ₂Coₓ₂Al_{y2}M²_{z2}O_{2-b2}
with 0.9≤a2≤1.8, 0.878≤x2≤0.985, 0.015≤y2≤0.022, 0≤z2≤0.1, 0.9≤x2+y2+z2≤1.1, and 0≤b2≤0.1, and with M² being at least one of B, Ba, Ca, Ce, Cr, Cu, Fe, Mg, Mn, Mo, Nb, Si, Sn, Sr, Ti, V, W, Zn, Y and Zr.

10. A positive electrode for a rechargeable lithium battery comprising
a positive electrode current collector; and
a positive electrode active material layer on the positive electrode current collector,
wherein the positive electrode active material layer includes the positive electrode active material for a rechargeable lithium battery as claimed in any one of claims 1 to 9.

11. The positive electrode for a rechargeable lithium battery as claimed in claim 10, wherein a loading level of the positive electrode active material layer is 5 mg/cm² to 50 mg/cm².

12. The positive electrode as claimed in claim 10 or claim 11, wherein the positive electrode active material layer has a density of about 4.0 g/cc to about 4.5 g/cc.

13. A method of manufacturing a positive electrode for a rechargeable lithium battery, the method comprising:
preparing a composition including a first positive electrode active material including a first lithium cobalt-based oxide doped with aluminium and a second positive electrode active material including a second lithium cobalt-based oxide doped with aluminium;
coating the composition on a current collector; and
drying and then compressing composition on the current collector,
wherein an average particle diameter (D₅₀) of the first positive electrode active material is greater than an average particle diameter (D₅₀) of the second positive electrode active material, and
wherein an amount of aluminium based on 100 wt% of a total metal amount in the second positive electrode active material excluding lithium is greater than an amount of aluminium based on 100 wt% of a total metal amount in the first positive electrode active material excluding lithium.

14. A rechargeable lithium battery comprising
the positive electrode for a rechargeable lithium battery as claimed in any one of claims 10 to 12;
a negative electrode; and
an electrolyte.
